# EUROPEAN PATENT APPLICATION

(11) **EP 0 872 323 A2**
(43) Date of publication of application: **21.10.1998**
(21) Application number: 98106298.7
(22) Date of filing: 07.04.1998
(51) Int. Cl.: B29C 33/10, B29C 33/38, C11D 13/16, B29C 33/46

(54) **Die and method for forming moldable materials with the said die**

(30) Priority: 18.04.1997 IT SV970021
(71) Applicant: Stabilimenti Italiani Gavarry S.p.A., 17011 Albisola (SV) (IT)
(72) Inventor: Briano, Bernardo, 17100 Savona (IT)
(74) Representative: Karaghiosoff, Giorgio Alessandro, Dipl.-Phys.

(57) **Abstract**

A die for forming plastic material, particularly such as soap, or the like comprises at least two parts (1, 2) which are displaceable one against the other form an open position of the die into a closed position of the die. At least one of the two parts of the die (, 2) is made of porous material, this means permeable to air, or otherwise provided with microchannels. According to the invention the said part or the said parts (1, 2) of the die which are porous or otherwise permeable to gases or provided with microchannels, may be connected, at least in the phase of closing the die, i.e. of complete nearing of the two parts (1, 2) of the die once against the other, to means (4, 5, 7, A, D, P) for generating an air cushion which is elastically compressible and permeates the said part or parts (1, 2) of the die being porous or permeable to gases. The invention relates also to a method for forming plastic or moldable materials.

## Description

The invention relates to a die for forming moldable materials, in particular such as soap, or the like, the said die comprising two parts which are displaceable one against the other from an open position to a closed position of the die, at least one of the two parts of the die being made of porous material, this meaning of material permeable to air, or in otherwise provided with microchannels.

This kind of molding dies is known and in particular in the field of soap molding it has been used for overcoming the problems regarding the separation of the shaped soap cakes from the die. In fact providing a connection between the porous part or parts of the die with a distribution chamber for a fluid under pressure, this fluid ensured a separation of the molded piece from the part or the parts of the die through the micropores or the microchannels provided in the said part or parts of the die.

The porous dies may be easily obtained thanks to the sintering technology. Particularly in the case of metallic dies, the molding die matrices are built by sintering metallic powders with a pre-estabilished granulometry. As known, during sintering the particles of the powder weld together almost at their surface, while hollow spaces between the single particles remain free. The dimension of the particles or the dimensional distribution within the used prime material in powder form influence the distribution and the dimension of the hollow spaces an thus the porosity of the material.

The known dies, show the draw back consisting in the fact that when the final shape of the piece shows structures in relief, such as particular designs or shapes being obtained through corresponding and complementary recesses in the molding surface of the parts of the die, the gas or air pressure prevents the material to penetrate completely in the said recesses. Indeed, the said recesses are only a very small part of the global volume of the piece and thus the air accumulated in the said recesses is a considerable part of their volume so that the imperfection in shape appears evident to the naked eye.

Actually it is found a remedy for the said draw back by providing suitable exhausts, which are often difficult to be built and whose arrangement requires further processing steps of the die.

An object of the invention is to provide a die for plastic or moldable materials, like for example soap, or the like, which allows to obviate to the draw backs of the known dies thanks to very simple and less expensive measures.

The invention reaches the aforementioned aims by means of a die of the kind described at the beginning, in which at least one of the at least two parts of the die is made porous or otherwise permeable to gas or provided with microchannels, the said part of the die being connected to means for generating an elastically compressible air cushion which permeates the said porous or gas permeable part or parts of the die in the phase of closing the die or of complete narrowing of the two parts of the die.

Depending on the kind of the material which has to be molded, on the volume of the final shape and on the porosity or permeability to gases of the die it is possible to obtain this air cushion by connecting the part or the parts of the die permeable to gases to a chamber which is filled with gas, particularly with air at a slight overpressure, maximum of approximately 6 to 8 atm.

Alternatively, the camber or the chambers gas-tight connected respectively with the porous or gas permeable part or parts of the die can be connected to atmospheric pressure or to a depression source.

Thanks to the above mentioned features it is possible to obtain also complex shapes of the plastic or moldable material, by simply making use of the known construction without renouncing to the advantages regarding the easiness ensured by the said known dies for separating the piece after its shaping.

The die according to the invention needs indeed very few and extremely simple constructive interventions. In particular, at the inlet of the distribution chamber being tightly connected with the part of the die permeable to gases, it is possible to provide a multi-way valve of the kind which may be servocontrolled, for example electrically, by connecting to a central control unit receiving the activation signals of the valve, for positioning the valve on the different positions of opening the passageways of connection alternatively with the source of depression, with the external environment, with one or more of different sources of pressure.

This arrangement allows also a considerable flexibility of employment with different kinds of materials in the same die, being always possible to regulate the optimum parameters of pressure, depression etc., with simple adjustments.

The further improvement of the invention are subject matter of the subclaims.

The features of the invention and the advantages deriving therefrom will result better from the following description of a non limiting embodiment which is illustrated in the enclosed drawings in which:
Figure 1 shows a sectional view through a die according to the invention.
Figure 2 shows a strongly enlarged particular, representing the porous structure of a die obtained by sintering metal powders, or the like.
Figure 3 show e schematic view of an example of the die according to the invention.

Referring to the figures, a die for forming masses of plastic material, i.e. of moldable material, particularly for forming soap cakes, shows at least two parts 1, 2 of the die which are displaceable one against the other in a position of adherence of their facing free edges, i.e. in a position of closure of the die and in a position of opening the die, i.e. in which the two parts 1, 2 of the die are spaced apart one of the other for feeding the mass to be molded and for discharging the shaped piece.

In the shown figure, the two parts of the die are shaped in such a way for forming the moldable mass in a fish-like shape. This very stylised shape is obtained providing small recesses 103 in the active surface 3 of the parts 1, 2 of the die.

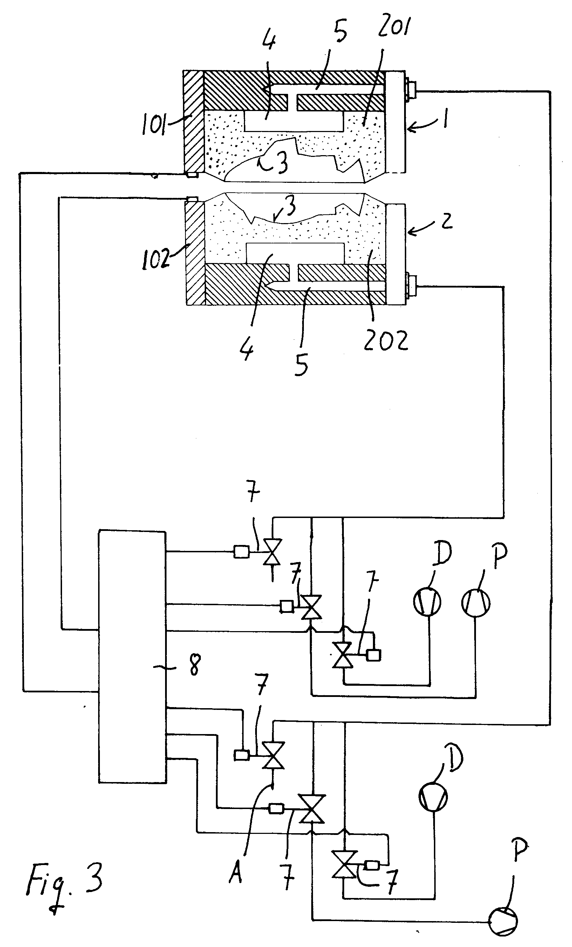

The parts of the die are made of a porous material or of a material which is provided with microchannels, so that this materials are in anyway permeable to the air or to any other gas. In the rear side both parts 1, 2 of the die show a chamber 4 which may be formed in the body of the same one and which communicates with a connecting duct 5. The connecting duct 5 may be connected to the atmospheric pressure A, to a source of depression D or to a pressure source P. As shown in figure 3, it is possible to provide a plurality of valves, preferably solenoid valves, or the like, 7 or even only one multi-way valve, also this one preferably of the servo-controlled kind, like a solenoid valve, or the like, the said valves connecting alternatively and depending on the need the ducts 5 to the atmospheric pressure A to the source of depression D or to the pressure source P. The source of depression and the pressure source may be constituted by per se known means, like a exhaust fan or a pump. The two part of the die may be connected to a common circuit and both to the atmospheric pressure A, to the source of depression D or to the pressure source P, which may be the same for both parts, or each part 1, 2 of the die is connected or may be connected separately from the other to a dedicated source of depression D, to a dedicated source of pressure P and to the atmospheric pressure A. Furthermore the two parts 1, 2 of the die may show a composite construction, comprising a housing base 101, 102 in which a recessed seat is created for the shaped molding part 201, 202. The connecting duct or the connecting ducts 5 are arranged in a position coinciding with the chamber 4 of the shaped molding parts 201, 202 in the corresponding wall of the housing base 101, 102.

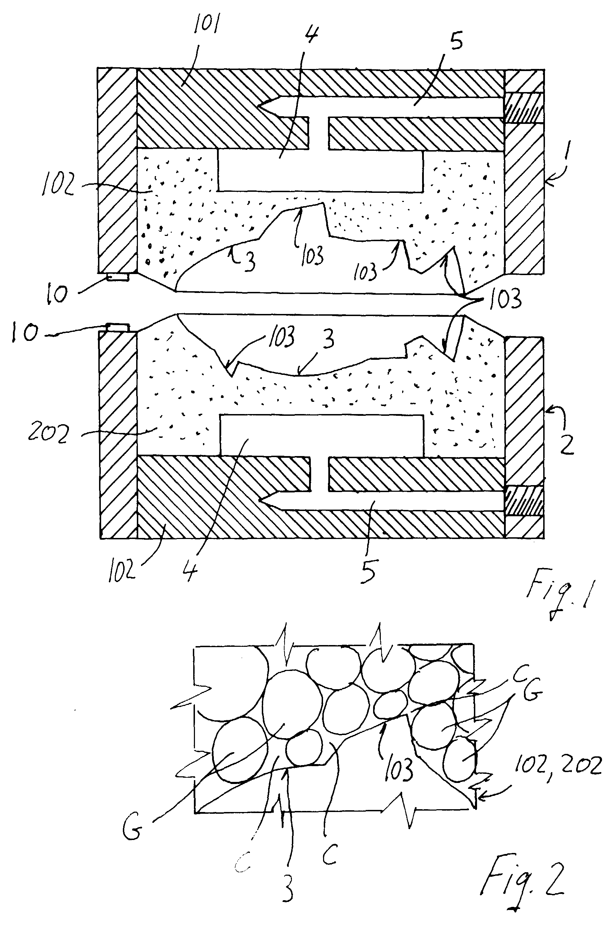

A particularly suitable material for fabricating porous molding parts 201, 202, i. e. permeable to gases, is obtained by sintering metal powders. Indeed as indicated in an extremely schematic way in fig. 2,during the sintering process, in the material between the single particles G of the powder, there remains hollow spaces C, forming a net of microscopic passages for the gases.

According to the invention at least during the final part of the displacement for closing the two parts 1, 2 of the die one against the other, when the mass of moldable material penetrates in the recesses 103, a pneumatic cushion is generated in the shaped molding parts 201, 202 permeable to air, thanks to the chamber 4 and to the connecting ducts 5. Thus the air remaining trapped in the recesses 103 in the final forming phase, can be pushed outside the molding parts through the microchannels of the same ones, allowing the material to penetrate completely in the recesses 103.

Depending on the kind of the treated material and on the kind of the porous molding parts 201, 202 and also to the mass being treated, it may be suitable to generate an air cushion at atmospheric pressure, an air cushion at a certain overpressure in relation to the atmospheric pressure, for example at a pressure of about 6 to 8 atm, or even applying a depression to the porous molding parts 201, 202 by connecting the ducts 5 and the chambers 4 to exhausting fans or to any kind of vacuum generating means.

Because for the separation of the shaped pieces from the die it is advantageous to shuffle gas through the microchannels of the porous molding parts 201, 202, according to a particular, advantageous embodiment, it is possible to provide controlling means which controls the solenoid valves 7 at the connecting ducts 5 in the sense of connecting the same ones to the source of depression D, to the atmospheric pressure A or to the pressure P, depending on the molding step, in order to generate the air cushion or to generate the pressure needed for the separation of the shaped piece, which generally is higher than the pressure needed for generating an air cushion. The automatic control means are not shown in detail and may consist in a electronic central unit 8 to which sensors 10 are connected. The sensors may consist in mechanical, electromechanical means, like limit switches, electronic or optoelectronic means, like light barriers, proximity sensors or distance sensors, or the like. In order to automatize the procedures, electric means generating different signals for each different operative condition which is relevant for the molding process are mainly advantageous. The said signals are fed to the central unit 8 which determines the command signal of the corresponding passageway of the multi-way solenoid valve or of the corresponding solenoid valve 7.

In the illustrated example, the sensors associated to the parts 1, 2 of the die are formed by distance sensors being secured to each one of the parts 1, 2 of the die and measuring the relative distance between the said two parts.

Obviously the invention is not limited to the embodiments which has been described above and illustrated but it may be varied especially from the constructive point of view, without leaving the protected ambit exposed above and claimed below.

## Claims

1. Die for forming moldable materials, particularly like soaps, or the like, which die comprises at least two parts (1, 2) movable the one against the other from an open position into a closed position of the die, at least one of the two parts(1, 2) of the die being made of porous material, i.e. permeable to air or otherwise provided with microchannels, characterised in that the said part or parts (1, 2) of the die being made porous or in any case permeable to gas or provided with microchannels, can be connected, at least in the phase of closing the die, i.e. of complete narrowing of the said two parts (1, 2) one against the other, to means (4, 5, 7, A, D, P) for generating an elastically compressible air cushion which permeates the said porous or gas permeable part or parts (1, 2) of the die.

2. Die according to claim 1, characterised in that the air cushion is obtained by connecting to the gas permeable part or parts (1, 2) of the die a chamber (4) exposed to the gas, particularly air, with a slight over pressure (P) of maximum about 6 to 8 atm.

3. Die according to claim 1, characterised in that the chamber o the chambers (4) gas-tight connected (5) respectively with the porous or gas permeable part or the parts (1, 2) of the die can be connected to atmospheric pressure (A), or to a source of depression (D) for generating an air cushion or for aspirating the air compressed against the shaped surface (3, 103) of the parts (1, 2) of the die by the mass being in the molding phase.

4. Die according to one or more of the preceding claims, characterised in that preferably both of the parts (1, 2) of the die are built at least partially of sintered metallic powder.

5. Die according to one or more of the preceding claims, characterised in that the part or parts (1, 2) of the die are provided with means (10) for surveying the operative position and with means for controlling valves (7) in order to connect ducts (5) associated to the parts (1, 2) of the die, alternatively to atmospheric pressure (A), to a source of pressure (P) suitable for generating an air cushion or to a source of depression (D) or with a source of higher pressure suitable for separating the shaped piece form the part or the parts (1, 2) of the die.

6. Method for forming plastic or moldable materials, particularly soaps for producing soap cakes, in a die according to one or more of the preceding claims 1 to 5, characterised in that during the final part of the stroke for the complete closure of the die, i. e. for the complete narrowing of the two parts (1, 2) of the die, an air cushion is generated which permeates the said porous parts (1, 2) of the die and in such a way to allow the at least temporary expulsion of the air from the die by means of the material being under molding.

7. Method according to claim 6, characterised in that the air cushion is generated, by applying to one or to both the parts (1, 2) of the die an overpressure of about 6 to 8 atm.

8. Method according to claim 6, characterised in that the air cushion is generated thanks to the connection of the porous parts (1, 2) of the die to atmospheric pressure (A) or to a depression (D).

9. Method according to one or more of the preceding claims characterised in that it comprises a phase of applying to both parts (1, 2) of the die a strong over pressure for separating the two parts (1, 2) of the die from the shaped piece, and which phase follows the phase of generating the air cushion ad takes place when the two parts (1, 2) of the die are moved apart one of the other.

10. Die for forming moldable materials and method for forming moldable material with the said die, wholly or partially as described, illustrated and for the before mentioned aims.
